# EUROPEAN PATENT APPLICATION

(11) **EP 2 166 439 A1**
(43) Date of publication of application: **24.03.2010**
(21) Application number: 08016683.8
(22) Date of filing: 23.09.2008
(51) Int. Cl.: G06F 3/048

(54) **Method an apparatus for providing access to data items**

(71) Applicant: Vodafone Holding GmbH, 40213 Düsseldorf (DE)
(72) Inventor: Velick, Deborah, D-40233 Düsseldorf (DE)
(74) Representative: Jostarndt, Hans-Dieter

(57) **Abstract**

A display apparatus is suggested which is provided with a processing unit and which is connected to a storage device. The display apparatus is arranged to display icons associated with data items stored on the storage device. The processing unit is provided with filter means allowing for filtering data items stored on the storage device. The processing unit controls the display apparatus such that the display apparatus presents a graphical user interface allowing a user to selectively activate or deactivate one or several filter means. The processing unit further controls the display apparatus such that the appearance of the graphical user interface changes upon the activation or deactivation of one or several filter means to inform the user about the selected setting of the filter means. The display apparatus according to the invention supports the user effectively in managing his communication items.

## Description

The present invention is related to a display apparatus. In particular, the present invention is related to display apparatus according to claim 1.

### Background of the Invention

Communication generally becomes more and more important today. Especially communication with modem digital communication devices such as personal digital assistants (PDA), portable computers, mobile telephones, palm top computers etc. is of increasing importance. Sometimes these devices are also equipped with a camera and a microphone for taking pictures as well as for recording video and audio data. The features and capabilities of the devices lead to an increasing number of data files that maybe exchanged between different devices and users by wireless or wired networks. As an example, a mobile telephone is no longer limited to receiving and making voice calls but it may take photographs, receive e-mails and SMS-messages and voice messages. A variety of different kinds of communication increases the number of communication items significantly. This number of communication items is increased even more because one and the same communication items of the above mentioned types is frequently copied to a plurality of recipients. In addition to that, the communication devices store contact information of every individual with whom any kind of communication has taken place. This type of information is referred to as contacts. The contacts form part of the communication items. Technically speaking all communication items are data items. Because of the shear quantity it becomes consequently more and more difficult for individuals to organize their communication items. Some of these communication items contain valuable data for the user and the prudent user will therefore make backups of the data stored on his mobile device.

E.g. this can be done through appropriate software running on a computer to synchronise the computer with the mobile device. However, in reality some users do not pay the necessary attention to this aspect. In consequence, they loose valuable data if their mobile communication device gets lost or destroyed. Under this aspect it is quite advantageous if the data items of the user are not only stored on his mobile communication device but also on a server of a network provider.

In this case the user does not have to take any action to make a backup storage of his communication items and contacts. If his mobile communication device gets lost or destroyed all his communication items which were stored on his mobile communication device can be recovered from the backup copy stored on the server of the network provider.

At the same time this concept enables the user to work on the communication items not only through his mobile device but also through other alternative devices which are allowed to have contact to the personal files of the user on the server. Such an alternative device could be a computer with internet access allowing the user to contact the files which are stored on the server of the network provider. This is a very useful feature because in this way the user can work more conveniently on information he has received because a computer in general provides a relatively larger screen and a more comfortable keyboard compared with most handheld mobile devices.

Taking this as a starting point there is a need for technologies providing users with a efficient access to data items related to communication contents and contacts. Specifically, there is a need for a display apparatus helping a user to efficiently manage communication items which are stored on the server of a network provider.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### Summary of the invention

The present invention therefore suggests display apparatus which is provided with a processing unit and which is connected to a storage device. The display apparatus is arranged to display icons associated with data items stored on the storage device. The processing unit is provided with filter means allowing for filtering data items stored on the storage device. The processing unit controls the display apparatus such that the display apparatus presents a graphical user interface allowing a user to selectively activate or deactivate one or several filter means. The processing unit further controls the display apparatus such that the appearance of the graphical user interface changes upon the activation or deactivation of one or several filter means to inform the user about the selected setting of the filter means. The display apparatus according to the invention supports the user effectively in managing his communication items.

In an advantageous embodiment of the invention the filter means are organized in different levels. It has been found to be useful that the filter means comprise on a first level a plurality of category filters. According to an improvement the filter means comprise on a second level a plurality of sub category filters which are all associated with one single category filter. This kind of organization of the filter means helps the users to develop individual filter settings for a given task.

According to a useful embodiment of the invention the user is further supported by the processing unit which controls the display apparatus to present for each category filter and for each sub category filter one icon. In this way an intuitively understandable graphical user interface is offered to the user.

Advantageously, the ergonomics can be further improved if the processing unit controls the display apparatus such that the icon associated with a sub category filter or with a category filter changes its appearance if the filter switches from being activated to being deactivated or vice versa.

It is advantageous if the processing unit controls the display apparatus such that an icon associated with a category filter changes its appearance if the sub category filters associated with the category filter change from an initial state to an end state, wherein in the initial state all sub category filters are activated and in the end state at least one of the sub category filters is deactivated. This is another measure to support the user.

According to an advantageous embodiment the processing unit controls the display apparatus such that only those data items stored on the storage device are displayed which have passed the filter means.

In yet a further improvement of the invention the processing unit is provided with different functionalities to control the display apparatus such that it displays the data items in a sorted way according to properties of the data items. The sorting feature facilitates the overview over the displayed communication items.

In a concrete embodiment the storage device can be a server which is connected to the display apparatus via a communication network. Even more specifically the communication network can be the internet and display apparatus can be a computer.

### Brief description of the drawings

In the accompanying drawing exemplary embodiments of the present invention are shown. It shows:
- Figure 1: a schematic illustration of a communication environment;

- Figure 2: a schematic illustration of the structure of a screen of an application of the present invention;
- Figure 3: a portion of figure 2 in greater detail;
- Figure 4a - 4e: schematic illustrations of the category filter menu with different filters selected;
- Figure 5a - 5d: schematic illustrations of the sub filter menu in different states; and
- Figure 6: a schematic view on the sorting of items on the screen.

### Detailed description of embodiments of the invention

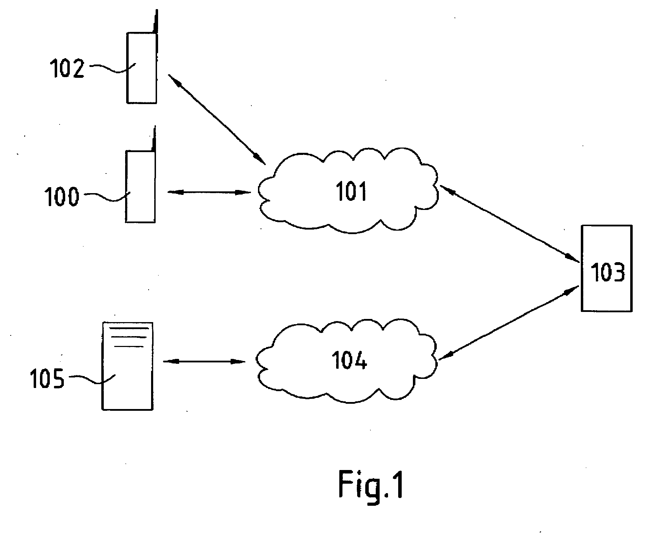

Figure 1 schematically depicts a communication environment. A mobile communication device 100, such as, a mobile phone, a PDA or the like is connected to a wireless public land mobile network (PLMN). The PLMN 101 is a wireless telecommunication network according to GSM standard or according to the UTMS standard for example. The user of the communication device 100 can set up a connection to another communication device 102 through the network 101. The communication devices 100 and 102 are only representative examples of a large plurality of communication devices. The network 101 is also connected with a server 103 of the network provider. Among other functionalities the server stores communication items, i.e. data files, of the users of the network 101.

Additionally, the server 103 is connected to a second communication network 104 such as the internet. Figure 1 shows also another communication device 105 such as a computer which is also connected to the network 104.

In an embodiment of the invention it is assumed that the computer 105 belongs to the user of the communication device 100. The computer 105 enables this user by means of appropriate software including access control features to access his communication items stored on the server 103. The access control can be based on codes and/or smart cards. This concept enables a user to work on communication items stored on the server 103 in a more convenient way because the computer 105 usually has a bigger screen and a more comfortable keyboard than a mobile communication device. The computer has conventional structure and comprises data storage and processing means as well as a display. For the purpose of the present invention the computer is operated as a display device. However, the display device of the present invention does not need to be a general purpose computer but it may be as well any other device which provides the required functionalities. For the sake of conciseness the display device as a whole is not shown in the drawings.

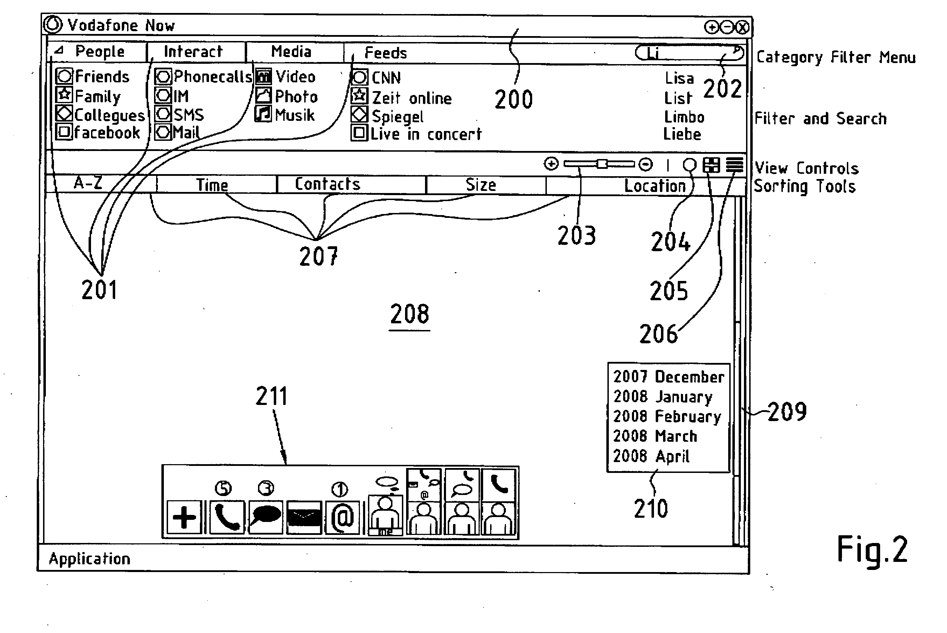

Figure 2 shows the structure of a display 200 of an application running on the computer 105. The computer 105 is not shown in Figure 2.

The top of the screen 200 provides the user with a category filter menu 201 allowing him to select between people, interaction, media, and feeds, such as are RSS-feeds. At the same time the user may search for certain keywords in a search window 202 and corresponding search results are displayed instantaneously below the search window 202. Below the category filter menu 201 there are icons enabling the user to select certain sub category filters such as friends, family, colleagues and facebook in the category filter of people. Facebook is only an example for a social network platform facilitating contacts to other people. The category filter of interaction is structured according to different types of communication such as phone calls, instant messaging (IM), SMS-messages, and e-mails. The category of media provides a selection among video, photo, and music. The category filter of feeds is e.g. online services of news companies. It is noted that the search window 202 works independently of the filters but it can also be used in combination with the category and/or subcategory filters. Below the filter and search menu there are some input elements 203 to 206 allowing the user to control the view on the screen. The input elements 203 to 206 form a view control for the screen. Input element 203 is a horizontal slider which will be explained later in connection with other functionalities. With input element 204 a user selects to display all communication items in a 2-dimensional view on the screen as will be explained in more detail further below in the description. Input element 205 initiates a grid view of items and input element 206 a line view. These functionalities will be explained further below. Just below the view control there are sorting tools 207 provided allowing a user to sort items on the screen according to the alphabet from a to z, according to time, contacts, size, location is labelled with the abbreviation "interact" and it and by kind. The latter sorts the communication items shown on the display 200 according to the data type such as e-mail, SMS message etc. The biggest portion of the display 200 is covered by the content area 208 where icons representing the content are displayed. On the right hand side of the contact area there is a scroll bar 209 allowing the user to scroll through the communication items which will be explained later. The length of the scroll bar indicates the length of the time span. In one embodiment the user is informed about the time span by a label 210 which is faded in. Finally, below the content area 208 there is a menu bar 211 providing contextual options and a notification area.

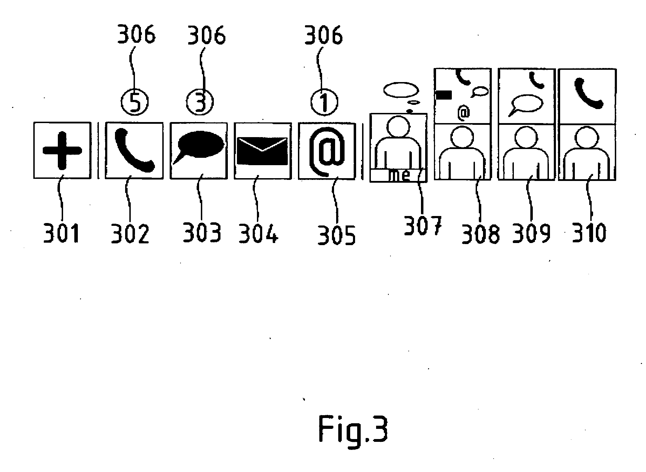

In figure 3 the menu bar and notification area 211 is shown in greater detail. There is an icon 301 which is a general option to add a new icon to the menu bar 211. Icons 302 to 305 provide different communication options. The icon 302 is for setting up a phone call, icon 203 is related to SMS- messages, icon 304 is related to e-mails and icon 305 to internet feeds, such as RSS-feeds from news providers. On top of the communication icons 302 to 305 there are indicators 306 indicating the number of missed events in the related content area. In the situation shown in figure 3 the user has missed five telephone calls; he has three unread SMS-messages and one unopened internet feed.

Next to the communication items 302 to 305 there is one shortcut icon 307 displaying the details of the user upon actuation of the icon 307. Finally, there are on the right hand side of the menu bar 209 three icons 308 to 310 which are related to windows of ongoing communication. On top of those icons 308 to 310 open communication channels are symbolised by associated symbols inside icons 311 to 313. Each of the icons 311 to 313 provides a shortcut directly to the respective communication window In which one or several communication channels are open. The symbols representing the open communication channels correspond to the symbols which are used for the corresponding communication icons 302 to 305. The symbols are shown inside the icons 311 to 313.

The category menu filter 201 shown in figure 2 provides icons with labels to activate or deactivate a category filter. However, depending on the available space on the screen 200 of the communication device 105 the icons 201 of the category filter menu are also displayed without label if there is not sufficient space on the display. This may be the case if the user has opened a plurality of windows such that the icons displayed in each of the opened windows have to be reduced in size accordingly.

A user can activate or deactivate a filter by clicking on the icon 201 of the corresponding filter. The icon of a deactivated filter is displayed in grey on the screen, preferably in light green to be distinguishable from surrounding screen areas. The icon of an activated filter is displayed in a colour on the screen. In an exemplary embodiment of the invention "people" filter is displayed in yellow, the "interaction" filter is displayed in purple, the "media" filter is displayed in blue and the "feeds" filter is displayed in green, if these filters are activated.

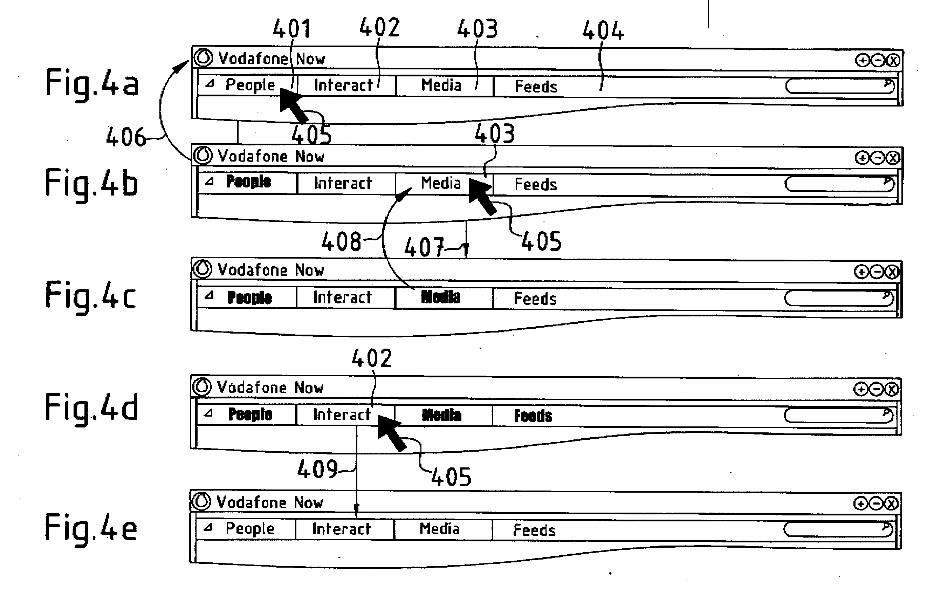

Figures 4a to 4e show the upper portion of display 200 of figure 2 and illustrate different states of the category filter menu 201 as well as the functionalities provided by this menu. In figure 4a all filters are off and all communication items stored on the server 103 are displayed in the content area 208 (not shown in figure 4a). For the sake of clarity the different category filters shown in figures 4a to 4e are labelled with reference numbers 401 to 404. It is to be understood that the four category filters shown in figures 4a to 4e are only examples and the invention is not limited to a specific number of category filters let alone to the specific types of category filters shown in figures 4a to 4e.

In figure 4a all category filters are deactivated and the corresponding icons 401 to 404 are displayed in light grey. In order to activate the "people" filter the user moves a cursor 405 on icon 401 and clicks onto it. As a consequence only those communication items belonging to the people category are displayed in the content area 208. At the same time when the people filter gets activated the appearance of icon 401 changes such that the label "people" is now displayed in yellow colour. This is symbolized in figure 4b by a different front type. Clicking a second time on the icon 401 deactivates the people filter and brings the category filter menu back to the status shown in figure 4a. The transition back to the original state shown in figure 4a is indicated by an arrow 406. If the user clicks on icon 403 to activate the "media" filter, the category filter menu transitions from the status shown in figure 4b into the status shown in figure 4c which is also indicated by an arrow 407. As it has been mentioned with regard to icon 401, the label of icon 403 changes its colour from light grey into blue to notify the user that the "media" filter has been activated. In figure 4c the blue colour of the label "media" is symbolized by a different front type. If the user clicks onto icon 403 once again the category filter menu returns to the status shown in figure 4b which is indicated by an arrow 408. In the status shown in figure 4c communication items belonging to the two categories "people" and "media" are then displayed in the content area 208 (not shown in figure 4c).

In figure 4d three category filters are active, namely the "people", "media", and "feeds" filters. Their corresponding icons 401, 403 and 404 are displayed in colour, while only the icon 402 related to the "interaction" filter remains in light grey because the "interaction" filter is not active. Consequently, in the situation shown in figure 4d all communication items belonging to one of the three activated categories are displayed in the content area 208 (not shown in figure 4d). If the user finally clicks onto icon 402 to activate the last filter, the category filter menu switches back into a state in which all filters are deactivated. The reason is as follows: if all filter categories are activated all communication items belonging to any of the four categories "people", "interaction", "media", and "feeds" are displayed in the content area. This is exactly the same result as for the category filter setting shown in figure 4a. Since it is more convenient for a user to make a selection starting from a situation in which all category filters are deactivated it has been chosen to deactivate all category filters if a user activates the last remaining category filter. Therefore, the state of the category filters shown in figure 4d changes into the state shown in figure 4e if the user clicks with the cursor 405 onto the icon 402. This transition is indicated by an arrow 409 between figure 4d and figure 4e. In the state shown in figure 4e all labels of the icons 401 to 404 are displayed in light grey like in figure 4a to inform the user about the selected setting of the category filters.

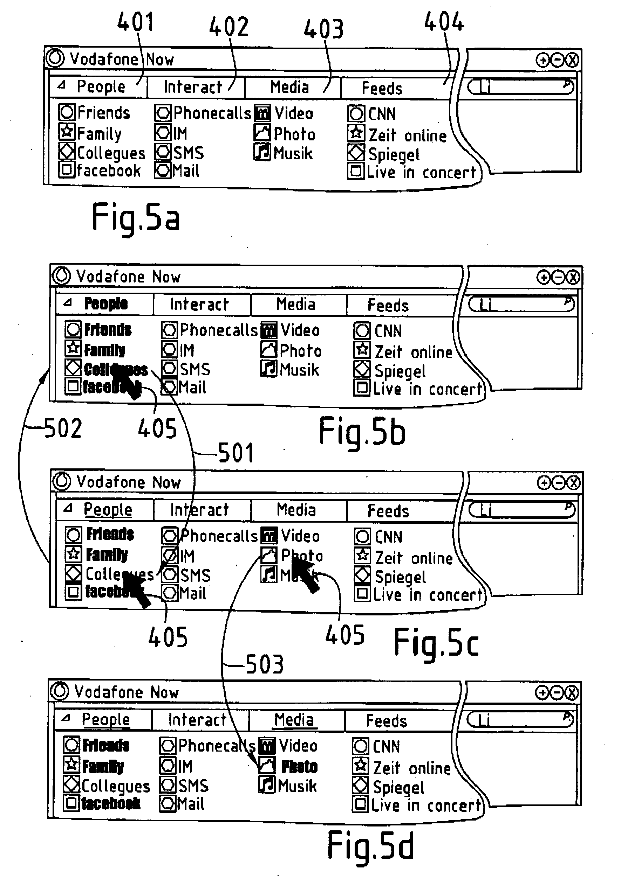

Each filter category comprises a plurality of sub categories. In figure 5a the sub categories associated with each of the four filter categories are illustrated. The category filter "people" comprises subcategory filters "friends", "family", "colleagues" and "facebook" as an example of a social network platform. The category filter "interaction" comprises as subcategory filters "phonecalls", "IM" (instant messaging), "SMS" (sms-messages) and "Mail" (e-mail). The category filter "media" comprises subcategory filters "video", "photo" and "music". Finally, the category filter "feeds" comprises subcategories "CNN", "Zeit online", "Spiegel" and "Live in concert" as exemplary news and entertainment providers. Again, figure 5a illustrates only an exemplary embodiment which shall not be construed to limit the invention to the categories and sub categories shown in figure 5a.

In the situation shown in figure 5a all category filters are deactivated and so are the sub filters. Consequently, the labels on the corresponding icons of the category filters and sub filers are displayed in grey colour informing the user that the filters are inactive. In this status all communication items belonging to any of the categories are displayed in the content area 208 (not shown in figure 5a.)

In figure 5b the user has clicked on the icon 401 to activate the people category filter. In response to that the label "people" on the icon 401 as well the icons for all sub category filters are displayed in yellow colour. The yellow colour is symbolized in figure 5b with a different front type. In this situation all communication items belonging to this category including all sub categories are displayed in the content area 208. If the user desires to deactivate a sub filter category he moves the cursor 405 onto the corresponding icon and clicks onto this icon. In figure 5b the user has decided to deactivate the sub filter category "colleagues". The transition is indicated by an arrow 501. Consequently, the contents displayed in the content area 208 changes and now it no longer includes communication items received from contacts falling into the sub category of "colleagues." At the same time the appearance of the graphical user interface for controlling the filter categories changes to unambiguously inform the user about the settings he has selected as it is shown in figure 5c. Firstly, all the icons associated with the sub category "colleagues" turn from yellow back to grey. Secondly, also the label of the icon 401 turns back from yellow to grey but receives a yellow underlining indicating to the user that the people filter category is activated but not all sub category filters are activated. In order to return from the state shown in figure 5c back to a state shown in figure 5b the user just needs to click on the icon of the subcategory filter "colleagues" again. The corresponding transition of the graphical user interface is indicated by an arrow 502. It is noted that the user is informed about the state of each category filter on three different levels: if the category filter is deactivated the label of the corresponding icon is grey. If the category filter is activated but does not include all sub category filters the label of the corresponding main category filter remains grey but receives a coloured underlining. Finally if the category filter is activated including all sub category filters the label of the corresponding icon is shown in a colour.

The user may activate sub category filters on an individual basis to facilitate an orderly and structured access to the communication items stored on the server 103 of the network provider.

Figure 5d shows a situation in which the user has activated the category filters people and media. However, not all sub category filters are activated and therefore the labels of icons 401 and 403 are shown in grey but receive a yellow and blue underlining, respectively. The user achieves the transition from the state shown in figure 5c to the state shown in figure 5d by clicking with the cursor 405 onto the icon of the subcategory filter "photo". In consequence, the label of the icon associated with the subcategory filter "photo" turns from grey to blue which is symbolized in figure 5d by a different font type. The transition from the state shown in figure 5c to the state shown in figure 5d is also indicated by an arrow 503. The principles of what kinds of communication items are displayed are the same for main category filters and sub category filters. In the situation shown in figure 5d all communication items belonging to the category of people are displayed except those from contacts which fall into the sub category of "colleagues". In addition to that, all communication items falling into the category of "media" and at the same time into the sub category "photo" are displayed as well. As mentioned above all activated category filters or sub category filters may be deactivated by clicking on the corresponding icon one more time.

The result of the filter function, i.e. the communication items which have been selected for display can be presented in different ways, e.g. in a grid view or in a list view by activating the icons 205 and 206, respectively. These two types of views are known in the art.

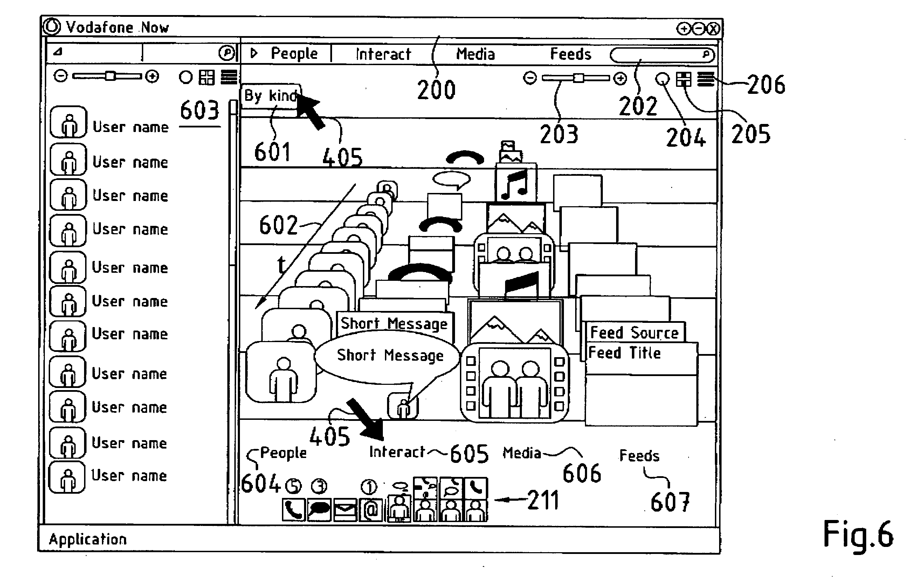

Figure 6 shows a presentation of the communication items in a perspective quasi 3-dimensional presentation in which the communication items are sorted according to the data type of the communication items. As can be seen in figure 6 all communication items related to the category of "people", "interaction", "media", and "feeds" are presented in a column like arrangement wherein the most recent items in each of the four columns is presented in the foreground of the presentation. This kind of presentation can be selected by clicking with the cursor 405 onto an icon 601 to initiate the sorting of all communication items by their kind, i.e. according to the data types. In each of the columns presented in figure 6 the time evolves from the background to the foreground of the presentation as it is indicated by arrow 602. Since each of the four columns is separated from the other ones it can be said that for each column there exist individual time lines helping the user to navigate through the communication items. For the sake of clarity each of the columns is labelled with a corresponding designation in the lower part of figure 6. On the left hand side of display 200 there is a window pane 603 which contains a list of users identified by their user names with whom the user of the present display apparatus was in contact.

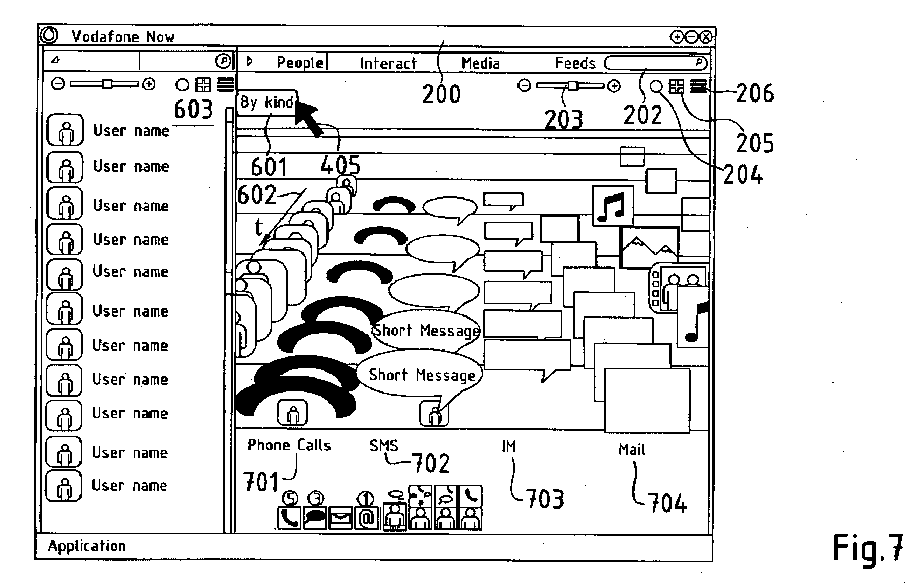

The four columns shown in figure 6 basically correspond to the main filter categories. As has been described above these main categories contain communication items belonging to all subcategories of the associated main category. Specifically, the column labelled with "interact" contains phone calls, SMS-messages, instant messaging and e-mails as communication items. By clicking with the cursor 405 onto the label 605 the column containing all communication items belonging to interactions is further expanded to separate the different types of communication items into separate columns as it is shown in figure 7. The same is possible for all other three columns shown in figure 6. It is also possible to separate more than one of the columns shown in figure 6 and even to separate all of the four columns shown in figure 6 at the same time.

As it can be taken from figure 7 each of the expanded columns is provided with a new label identifying the type of the communication items contained in the respective column. There is a label 701 for phone calls, a label 702 for SMS-messages, a label 703 for instant messages, and a label 704 for e-mails. If the user clicks onto one of the label 701 to 704 the presentation of the communication items switches back to the state which is shown in figure 6. The same mechanism for expansion and retraction of columns works for all columns shown in figure 6.

### List of reference numerals:

- 100, 102: communication device
- 101: network
- 103: server
- 104: network
- 105: communication device
- 200: display
- 201: category filter menu
- 202: search window
- 203: input element; horizontal slider
- 204: input element; user selects one item to be displayed on the full screen
- 205: input element; initiates a grid view of items
- 206: input element; initiates a line view
- 207: sorting tools
- 208: content area
- 209: menu bar
- 301: icon; general option to add a new icon to the menu bar
- 302: icon; setting up a phone call
- 303: icon; related to sms messages
- 304: icon; related to e-mails
- 305: icon; related to internet feeds
- 306: indicators
- 401 to 404: icon
- 405: cursor
- 406 to 409: arrow
- 501 to 503: arrow
- 601: icon
- 602: time line
- 603: window pane
- 604 to: 607 icons
- 701 to 704: labels/icons

## Claims

1. Display apparatus which is provided with a processing unit and which is connected to a storage device (103) wherein the display apparatus is arranged to display icons associated with data items stored on the storage device; wherein the processing unit is provided with filter means allowing for filtering data items stored on the storage device (103); wherein the processing unit controls the display apparatus such that the display apparatus presents a graphical user interface allowing a user to selectively activate or deactivate one or several filter means (401, 402, 403, 404); and wherein the processing unit further controls the display apparatus such that the appearance of the graphical user interface changes upon the activation or deactivation of one or several filter means to inform te user about the selected setting of the filter means.

2. Display apparatus according to claim 1, wherein the filter means are organized in different levels.

3. Display apparatus according to claim 2, wherein the filter means comprise on a first level a plurality of category filters.

4. Display apparatus according to claim 2 or 3; wherein the filter means comprise on a second level a plurality of sub category filters which are all associated with one single category filter.

5. Display apparatus according to 1 or several of the preceding claims, wherein the processing unit controls the display apparatus to present for each category filter and for each sub category filter one icon.

6. Display apparatus according to claim 5, wherein the processing unit controls the display apparatus such that the icon associated with a sub category filter or with a category filter changes its appearance if the filter switches from being activated to being deactivated or vice versa.

7. Display apparatus according to claim 6, wherein the processing unit controls the display apparatus such that an icon associated with a category filter changes its appearance if the sub category filters associated with the category filter change from an initial state to an end state, wherein in the initial state all sub category filters are activated and in the end state at least one of the sub category filters is deactivated.

8. Display apparatus according to 1 or several of the preceding claims, wherein the processing unit controls the display apparatus such that only those data items stored on the storage device are displayed which have passed the filter means.

9. Display apparatus according to 1 or several of the preceding claims wherein the processing unit is provided with different functionalities to control the display apparatus such that it displays the data items in a sorted way according to properties of the data items.

10. Display apparatus according to claim 1, wherein the storage device is a server which is connected to the display apparatus via a communication network.

11. Display apparatus according to claim 10, wherein the communication network is the internet and display apparatus is a computer.
